# EUROPEAN PATENT SPECIFICATION

(11) **EP 3 081 419 B1**
(45) Date of publication and mention of the grant of the patent: **14.03.2018**
(21) Application number: 15196027.5
(22) Date of filing: 24.11.2015
(51) Int. Cl.: B60K 11/04

(54) **WORKING VEHICLE**
NUTZFAHRZEUG
VÉHICULE DE TRAVAIL

(30) Priority: 17.04.2015 JP 2015085119
(43) Date of publication of application: 19.10.2016
(73) Proprietor: Iseki & Co., Ltd., Matsuyama-shi, Ehime 799-2692 (JP)
(72) Inventor: TODA, Hirotaka, Iyo-gun, Ehime 791-2193 (JP); BABA, Yusuke, Iyo-gun, Ehime 791-2193 (JP)
(74) Representative: Spengler, Robert

(56) References cited:
- EP-A1- 2 384 920
- WO-A1-2006/079696

## Description

### BACKGROUND OF THE INVENTION

### Field of the Invention

This invention relates to a working vehicle such as a riding grass-mower or the like.

A working vehicle such as a riding grass-mower or the like comprises, for example, a radiator which is arranged behind the left front wheel.

The radiator is a unit which suppresses overheating of the engine.

In a working vehicle like this, there is a fear that mud splashes behind accompanying the rotation of the left front wheel, and unfavorably adheres to a cover-portion of the radiator such as the radiator net or the like.

So, known is a working vehicle comprising a mudguard which protects the radiator, wherein the mudguard is arranged between the left front wheel and the radiator (for example, refer to generic European Patent Application Publication No. EP 2 384 920).

### SUMMARY OF THE INVENTION

However, in the conventional working vehicle described above, there has been a fear that the mudguard is not able to be simply and compactly attached.

An object of the present invention is, in consideration of the conventional problem described above, to furnish a working vehicle such that the mudguard can be simply and compactly attached.

The 1^{st} aspect of the present invention is a working vehicle comprising, a left front wheel (5310L) and a right front wheel (5310R), and a radiator (200) which is arranged behind one of the left front wheel (5310L) and the right front wheel (5310R),
a mudguard (400) which protects the radiator (200), and
a radiator-attaching frame (300) which attaches the radiator (200) to a vehicle-body (5000), wherein
in a case where the radiator (200) is arranged behind the left front wheel (5310L), the mudguard (400) is arranged between the left front wheel (5310L) and the radiator (200),
in a case where the radiator (200) is arranged behind the right front wheel (5310R), the mudguard (400) is arranged between the right front wheel (5310R) and the radiator (200), and the mudguard (400) is attached to the radiator-attaching frame (300), whereby the working vehicle comprises a tank (100) which accommodates oil-pressure oil or fuel, characterized in that in a case where the radiator (200) is arranged behind the left front wheel (5310L), all or part of the tank (100) is arranged above the left front wheel (5310L), and
in a case where the radiator (200) is arranged behind the right front wheel (5310R), all or part of the tank (100) is arranged above the right front wheel (5310R).

By means of this, since the mudguard (400) which protects the radiator (200) is attached to the radiator attaching frame (300), the mudguard (400) can be simply and compactly attached, and since all or part of the tank (100) is arranged above, a fear that the size of the mudguard (400) unfavorably becomes large can be decreased.

The 2^{nd} aspect of the present invention is the working vehicle according to the 1^{st} aspect of the present invention, comprising a mudguard-attaching member (500) which attaches the mudguard (400) to the radiator attaching frame (300), wherein the radiator-attaching frame (300) supports a front side of the radiator (200),
a front side of the mudguard-attaching member (500) is joined to a rear face of the mudguard (400), and
a rear side of the mudguard-attaching member (500) is connected to the radiator-attaching frame (300).

By means of this, the radiator (200) is more surely protected from mud by the mudguard (400), and the mudguard (400) can be more simply and more compactly attached.

The 3^{rd} aspect of the present invention is the working vehicle according to the 1^{st} or 2^{nd} aspect of the present invention, wherein
the mudguard (400) has a posture slanting in a front-and-rear direction, where a position of a front-end part thereof is higher than a position of a rear-end part thereof,
the front-end part of the mudguard (400) is positioned ahead of a rear-end part of a bottom face of the tank (100), and
the rear-end part of the mudguard (400) is positioned below a bottom face of the radiator (200).

By means of this, since the mudguard (400) has a posture slanting in the front-and-rear direction, the most part of the mud which has adhered to the mudguard (400) can be made to naturally fall down.

The 4^{th} aspect of the present invention is the working vehicle according to the 3^{rd} aspect of the present invention, wherein
at a rear part of the bottom face of the tank (100), a drain (110) is provided, and
the front-end part of the mudguard (400) is positioned ahead of the drain (110). By means of this, the drain (110) can be protected from mud.

The 5^{th} aspect of the present invention is the working vehicle according to the 1^{st} or 2^{nd} aspect of the present invention, wherein
the mudguard (700) has a posture parallel to a front face of the radiator (200),
at a rear part of the bottom face of the tank (100), a drain (110) is provided, and
the mudguard (700) is positioned behind the drain (110).

By means of this, a fear that smooth discharge of the oil-pressure oil or the fuel from the drain (110) is unfavorably prevented can be decreased.

The 6^{th} aspect of the present invention is the working vehicle according to the 5^{th} aspect of the present invention, wherein
a lower-end part of the mudguard (700) is positioned below a bottom face of the radiator (200), and is rearwardly bent.

By means of this, a fear that the mudguard (700) unfavorably interferes with the farm-field face can be decreased.

By the present invention, a working vehicle such that the mudguard can be simply and compactly attached is able to be furnished.

### BRIEF DESCRIPTION OF THE DRAWINGS

FIG. 1 is a right side view of the riding grass-mower of an embodiment in the present invention;
FIG. 2 is a top view of the riding grass-mower of an embodiment in the present invention;
FIG. 3A is a partial front view of a neighborhood of the right front wheel of the riding grass-mower of an embodiment in the present invention, and
FIG. 3B is a partial right side view of a neighborhood of the right front wheel of the riding grass-mower of an embodiment in the present invention;
FIG. 4 is a perspective view of the mudguard and the mudguard-attaching member of the riding grass-mower of an embodiment in the present invention;
FIG. 5A is a left side view of the mudguard and the mudguard-attaching member of the riding grass-mower of an embodiment in the present invention,
FIG. 5B is a top view of the mudguard and the mudguard-attaching member of the riding grass-mower of an embodiment in the present invention, and
FIG. 5C is a rear view of the mudguard and the mudguard-attaching member of the riding grass-mower of an embodiment in the present invention;
FIG. 6A is a partial front view of a neighborhood of the right front wheel of the riding grass-mower of another embodiment in the present invention, and
FIG. 6B is a partial right side view of a neighborhood of the right front wheel of the riding grass-mower of another embodiment in the present invention;
FIG. 7 is a perspective view of the mudguard and the mudguard-attaching member of the riding grass-mower of another embodiment in the present invention; and
FIG. 8A is a left side view of the mudguard and the mudguard-attaching member of the riding grass-mower of another embodiment in the present invention, and
FIG. 8B is a rear view of the mudguard and the mudguard-attaching member of the riding grass-mower of another embodiment in the present invention.

### Description of the Reference Numerals

- 100: tank
- 100a: tank face
- 110: drain
- 200: radiator
- 200a, 200b: radiator face
- 201: radiator net
- 300: radiator-attaching frame
- 400: mudguard
- 400a, 400b: mudguard face
- 400x, 400y, 400z: mudguard end part
- 500: mudguard-attaching member
- 501-505: mudguard-attaching member flat-portion
- 511, 512: mudguard-attaching bolt hole
- 521, 522: mudguard-attaching bolt
- 600: radiator-attaching frame
- 700: mudguard
- 700a, 700b: mudguard face
- 700y, 700z: mudguard end part
- 701, 702: mudguard flat-portion
- 800: mudguard-attaching member
- 801, 802: mudguard-attaching member flat-portion
- 811-814: mudguard-attaching bolt hole
- 821-824: mudguard-attaching bolt
- 1000: mower
- 1100: mower deck
- 1200: mower deck top-plate member
- 2000: blower
- 3000: collector
- 3100: collector door
- 5000: vehicle-body
- 5100: engine
- 5200: transmission case
- 5310L: left front wheel
- 5310R: right front wheel
- 5410L: left rear wheel
- 5410R: right rear wheel
- 5510: HST
- 5520: frame member
- 5530: operation part
- 5531: steering handle
- 5540: mowed-grass conveying shoot
- 5550: shooter
- 5560: post
- 5570: ascending-and-descending link mechanism
- 5571: ascending-and-descending link mechanism frame member

### DESCRIPTION OF THE EMBODIMENTS

In the following, referring to the drawings, descriptions are given in detail regarding embodiments in the present invention.

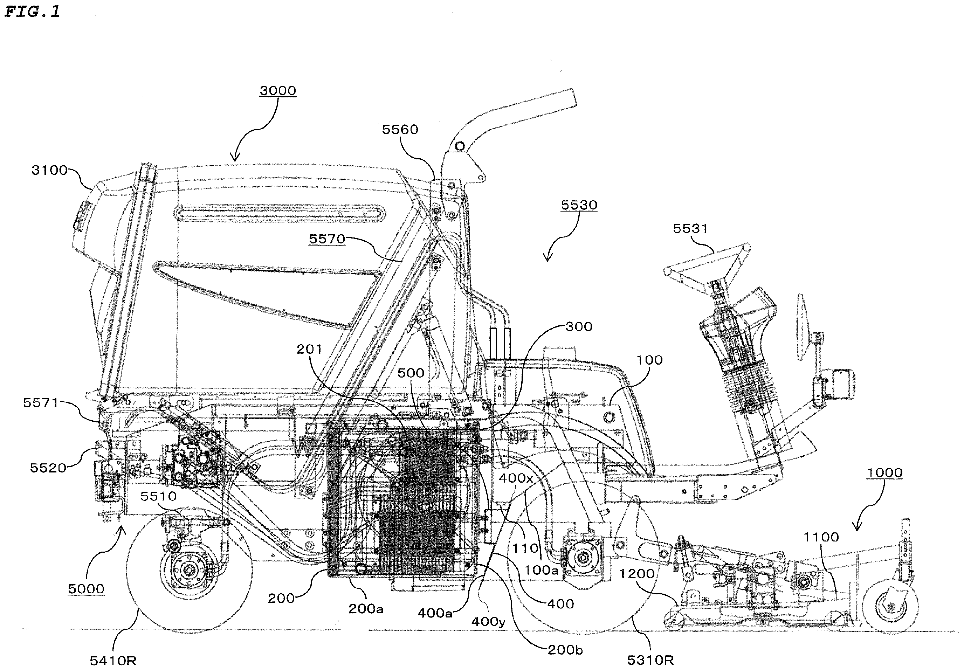

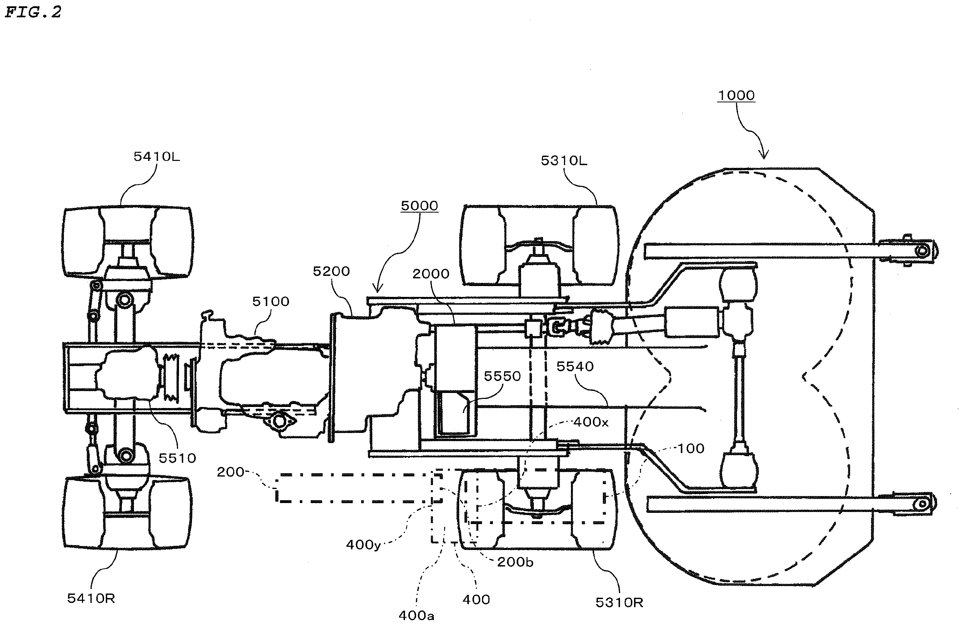

In the first place, referring to FIGs. 1 and 2, descriptions are specifically given regarding the configuration and action of the riding grass-mower of the present embodiment.

Here, FIG. 1 is a right side view of the riding grass-mower of an embodiment in the present invention, and FIG. 2 is a top view of the riding grass-mower of an embodiment in the present invention.

In FIG. 2, for making understanding of the relevant configuration easier, a collector 3000 and the like are not shown.

The riding grass-mower of the present embodiment as the working vehicle comprises a mower 1000, a blower 2000, and the collector 3000.

The mower 1000 is a unit which possesses a mower deck 1100 such that the top face is overlaid with a mower deck top-plate member 1200 and the bottom face is opened, and which mows a grass.

The blower 2000 is a unit which sucks the mowed grass.

The collector 3000 is a unit which accommodates the sucked grass.

In the front part of a vehicle-body 5000 which is supported by a left front wheel 5310L and a right front wheel 531 OR, and a left rear wheel 5410L and a right rear wheel 541 OR, an operation part 5530 for a worker's performing driving is provided.

In the operation part 5530, a steering handle 5531 for the worker's performing operation is provided. Of course, in the operation part 5530, a seat (not shown) on which the worker sits when performing operation and the like are also provided.

The mower 1000 and the blower 2000 are interconnected by a mowed-grass conveying shoot 5540 which conveys the mowed grass.

The grass conveyed in succession by the blower 2000 is discharged into the collector 3000 through a shooter 5550.

On the left-and-right both sides of the vehicle-body 5000, posts 5560's are provided.

The posts 5560's are positioned on the rearward side compared with the operation part 5530.

And, to the posts 5560's, the front ends of an ascending-and-descending link mechanism 5570 for performing a dump action of the collector 3000 accompanying opening-and-closing of a collector door 3100 are connected.

An ascending-and-descending link mechanism frame member 5571, which is supported by a frame member 5520 in the left-and-right direction, is provided at the rear end of the ascending-and-descending link mechanism 5570 and passes the rear side of the collector 3000 in the left-and-right direction.

Motive force generated by an engine 5100 is, by a transmission case 5200 which is provided between the blower 2000 and the engine 5100, transmitted to the blower 2000.

An HST (Hydro Static Transmission) 5510 is arranged on the upper side of the axle case (not shown) of the left rear wheel 5410L and the right rear wheel 5410R.

Next, mainly referring to FIGs. 1 and 2, descriptions are more specifically given regarding the configuration and action of the riding grass-mower of the present embodiment.

A radiator 200 is a unit which is arranged behind the right front wheel 5310R.

A tank 100 is a unit which accommodates the oil-pressure oil.

Additionally, in the present embodiment the tank 100 accommodates the oil-pressure oil for the ascending-and-descending link mechanism 5570, but the tank 100 may accommodate the fuel for the engine 5100. Of course, the oil-pressure oil may be the oil-pressure oil for a mechanism other than the ascending-and-descending link mechanism 5570, and the fuel may be the fuel for a mechanism other than the engine 5100.

A mudguard 400 is a unit which protects the radiator 200.

All of the tank 100 is arranged above the right front wheel 5310R, and the mudguard 400 is arranged between the right front wheel 5310R and the radiator 200.

Since the mudguard 400 is installed between the right front wheel 5310R and the radiator 200, there is almost no fear that mud splashes behind accompanying the rotation of the right front wheel 5310R, and unfavorably adheres to a cover-portion of the radiator 200 such as a radiator net 201 or the like.

And, since the tank 100 covers the upper side of the right front wheel 5310R, it is sufficient if the mudguard 400 covers the rear side of the right front wheel 5310R, and there is almost no fear that the size of the mudguard 400 unfavorably becomes large.

Additionally, in the present embodiment all of the tank 100 is arranged above the right front wheel 5310R, but part of the tank 100 may be arranged above the right front wheel 5310R. Of course, the tank 100 may be one tank, which is arranged straddling above both of the left front wheel 5310L and the right front wheel 5310R, such that the width in the left-and-right direction is comparatively large, and may be two tanks, which are respectively arranged above the left front wheel 5310L and the right front wheel 5310R, such that the widths in the left-and-right direction are comparatively small.

Moreover, in the present embodiment the radiator 200 is arranged behind the right front wheel 5310R, but the radiator 200 may be arranged behind the left front wheel 5310L and, namely, it is enough that the radiator 200 is arranged behind one of the left front wheel 5310L and the right front wheel 5310R. Of course, in a case where the radiator 200 is arranged behind the left front wheel 5310L, all or part of the tank 100 is arranged above the left front wheel 5310L, and the mudguard 400 is arranged between the left front wheel 5310L and the radiator 200.

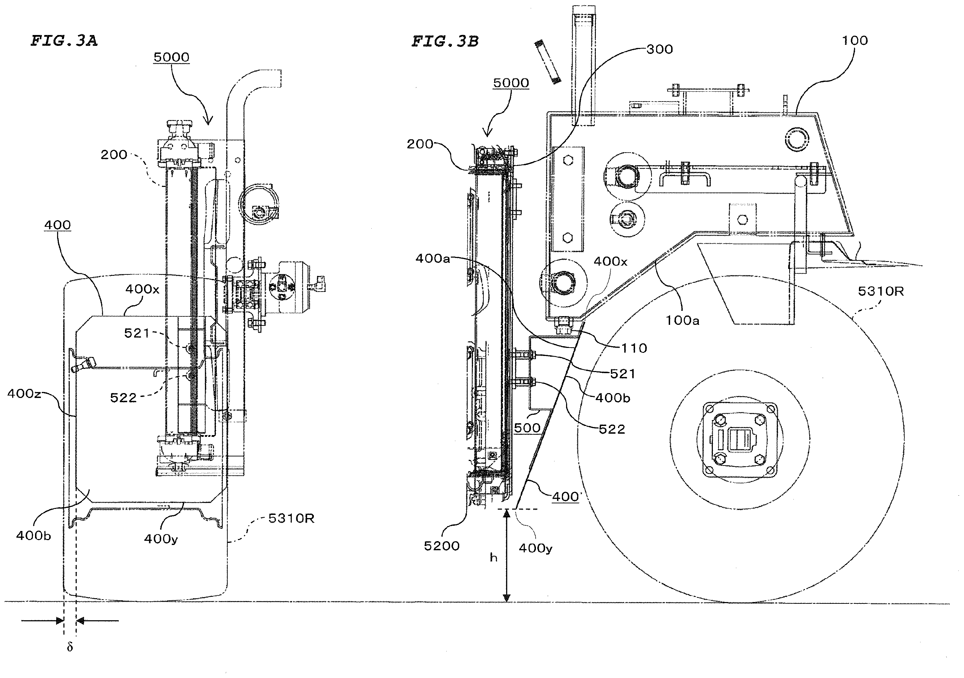

Next, mainly referring to FIGs. 3A and 3B, descriptions are still more specifically given regarding the configuration and action of the riding grass-mower of the present embodiment.

Here, FIG. 3A is a partial front view of a neighborhood of the right front wheel 5310R of the riding grass-mower of an embodiment in the present invention, and FIG. 3B is a partial right side view of a neighborhood of the right front wheel 5310R of the riding grass-mower of an embodiment in the present invention.

A radiator-attaching frame 300 is a frame which attaches, by supporting the front side of the radiator 200, the radiator 200 to the vehicle-body 5000.

A mudguard-attaching member 500 is a member which attaches the mudguard 400 to the radiator-attaching frame 300.

The front side of the mudguard-attaching member 500 is joined to a mudguard face 400a as the rear face of the mudguard 400.

The rear side of the mudguard-attaching member 500 is connected to the radiator-attaching frame 300.

Since the configuration is simple where the mudguard 400 is attached via the mudguard-attaching member 500 to the radiator-attaching frame 300 which is joined to the vehicle-body 5000, and the mudguard 400 is efficiently installed utilizing a peripheral member of the vehicle-body 5000, there is almost no fear that the configuration unfavorably gets complicated where the mudguard 400 is attached.

A tank face 100a as the bottom face of the tank 100 has a shape along at least one of the left front wheel 5310L and the right front wheel 5310R, which is positioned therebelow.

Since a mudguard face 400b which is the front face of the mudguard 400 continues to the tank face 100a, and the upper side and the rear side of the right front wheel 5310R are nearly completely covered by the tank 100 and the mudguard 400, there is almost no fear that the mud which has splashed behind accompanying the rotation of the right front wheel 5310R unfavorably adheres to the cover-portion of the radiator 200.

The mudguard 400 has a posture slanting in the front-and-rear direction, where the position of a mudguard end part 400x as the front-end part thereof is higher than the position of a mudguard end part 400y as the rear-end part thereof.

Since the mudguard 400 has a posture slanting in the front-and-rear direction, the most part of the mud which has splashed behind accompanying the rotation of the right front wheel 5310R and adhered to the obliquely and rearwardly downward mudguard face 400b naturally falls down for the self-weight, not persistently sticking to the mudguard face 400b.

The mudguard end part 400x as the front-end part of the mudguard 400 is positioned ahead of the rear-end part of the tank face 100a as the bottom face of the tank 100.

At the rear part of the tank face 100a as the bottom face of the tank 100, a drain 110 is provided.

The mudguard end part 400x as the front-end part of the mudguard 400 is positioned ahead of the drain 110.

Since the tank face 100a possesses, behind the obliquely and rearwardly downward slanting-portion which continues to the mudguard face 400b, the flat-portion where the drain 110 is provided, and the drain 110 is located on the outward side compared with the outer-end face of the mudguard-attaching member 500, there is almost no fear that smooth discharge from the drain 110 is unfavorably prevented.

The mudguard end part 400y as the rear-end part of the mudguard 400 is positioned below a radiator face 200a as the bottom face of the radiator 200.

Since the mudguard end part 400y gets close to the radiator net 201 from below, there is almost no fear that the mud which has splashed behind accompanying the rotation of the right front wheel 5310R unfavorably adheres to the radiator net 201 and the like.

And, since the height h of the mudguard end part 400y from the farm-field face is larger than the height of the bottom face of the transmission case 5200 from the farm-field face which defines the minimum ground clearance, the minimum ground clearance does not become small accompanying the installation of the mudguard 400 and, also when the traveling is performed in a farm-field which has undulations, there is almost no fear that the mudguard 400 unfavorably interferes with the farm-field face.

Further, since a mudguard end part 400z which is the outer-end part of the mudguard 400 is located on the inward side compared with the outer-end face of the right front wheel 5310R approximately at a distance of δ=22.5[cm], also when working is performed around a wall or a tree, there is almost no fear that the mudguard 400 unfavorably interferes with these.

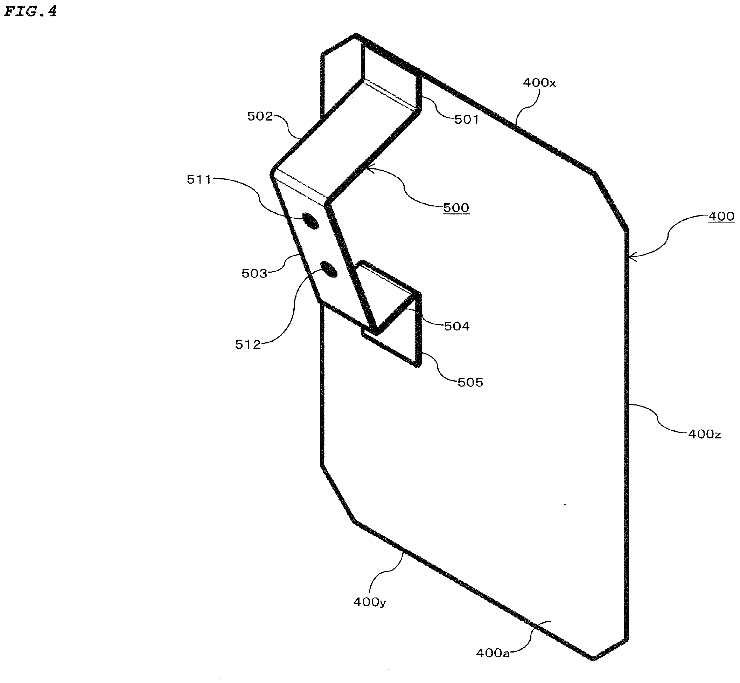

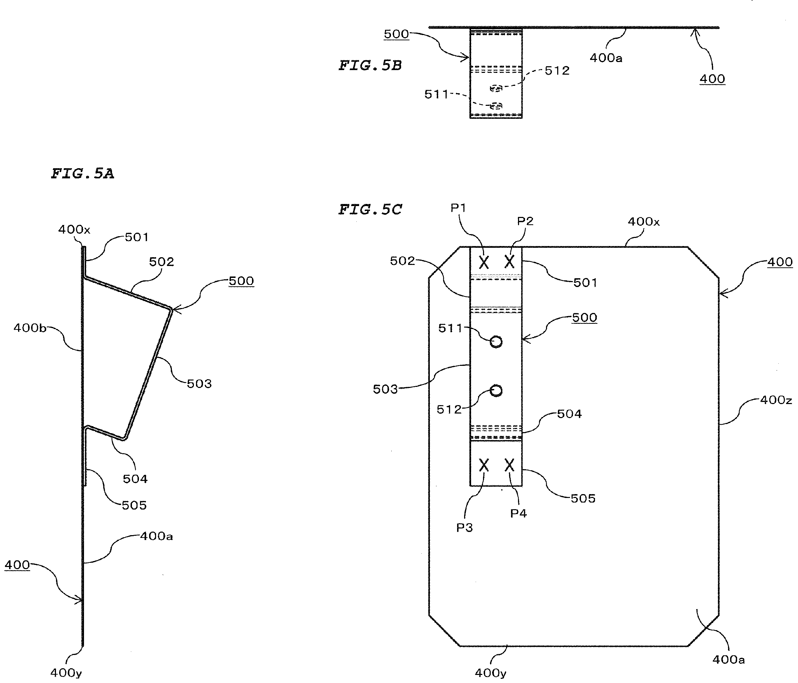

Mainly referring to FIG. 4 and FIGs. 5A to 5C, regarding the mudguard 400 and the mudguard-attaching member 500, more detailed descriptions are given as follows.

Here, FIG. 4 is a perspective view of the mudguard 400 and the mudguard-attaching member 500 of the riding grass-mower of an embodiment in the present invention, FIG. 5A is a left side view of the mudguard 400 and the mudguard-attaching member 500 of the riding grass-mower of an embodiment in the present invention, FIG. 5B is a top view of the mudguard 400 and the mudguard-attaching member 500 of the riding grass-mower of an embodiment in the present invention, and FIG. 5C is a rear view of the mudguard 400 and the mudguard-attaching member 500 of the riding grass-mower of an embodiment in the present invention.

The mudguard 400 which is attached to the radiator-attaching frame 300 has, as described above, a posture slanting in the front-and-rear direction, but the mudguard 400 and the mudguard-attaching member 500 are, in FIG. 4 and FIGs. 5A to 5C, shown in such a manner that the mudguard 400 is contained within the vertical face.

The mudguard 400 is a plate in a planar-plate shape such that the four corner parts are cut off.

The mudguard-attaching member 500 is a plate nearly in a U-shape in side view, which is bent into five portions.

More specifically, descriptions are given as follows.

The mudguard-attaching member 500 possesses mudguard-attaching member flat-portions 501 to 505 which are linked in this order from the upper side toward the lower side.

The mudguard-attaching member flat-portion 501 is welded to the mudguard face 400a at welding positions P1 and P2, and the mudguard-attaching member flat-portion 505 is welded to the mudguard face 400a at welding positions P3 and P4.

Thus, as described above, the front side of the mudguard-attaching member 500 is joined to the mudguard face 400a.

The mudguard-attaching member flat-portion 503 is linked with the mudguard-attaching member flat-portion 501 via the mudguard-attaching member flat-portion 502, and is linked with the mudguard-attaching member flat-portion 505 via the mudguard-attaching member flat-portion 504.

In the mudguard-attaching member flat-portion 503, mudguard-attaching bolt holes 511 and 512 are bored.

Mudguard-attaching bolts 521 and 522 which fasten up the mudguard-attaching member 500 to the radiator-attaching frame 300 are respectively inserted into the mudguard-attaching bolt holes 511 and 512.

Thus, as described above, the rear side of the mudguard-attaching member 500 is connected to the radiator-attaching frame 300.

Since the mudguard-attaching bolt holes 511 and 512 are bored lining up in the up-and-down direction, and a tool space is sufficiently secured by the mudguard-attaching member 500 which is bent, attachment/detachment working of the plural mudguard-attaching bolts 521 and 522 is easy.

And, since the mudguard-attaching bolts 521 and 522 are respectively inserted into the mudguard-attaching bolt holes 511 and 512 from the side of the mudguard face 400a as the rear face of the mudguard 400, and does not possess a portion being exposed to the side of the mudguard face 400b which is the front face of the mudguard 400, there is almost no fear that the mud which has splashed behind accompanying the rotation of the right front wheel 5310R unfavorably adheres to the mudguard-attaching bolts 521 and 522.

Additionally, the mudguard-attaching bolts 521 and 522 may be utilized not only for fastening up the mudguard-attaching member 500 to the radiator-attaching frame 300, but also for fastening up the radiator 200 to the radiator-attaching frame 300. Since in a configuration like this, where the mudguard-attaching bolts 521 and 522 are utilized in common for the attachment of the mudguard-attaching member 500 and the radiator 200, the mudguard 400 is detached along with the mudguard-attaching member 500 if the mudguard-attaching bolts 521 and 522 are detached, detachment working of the radiator 200 is easy.

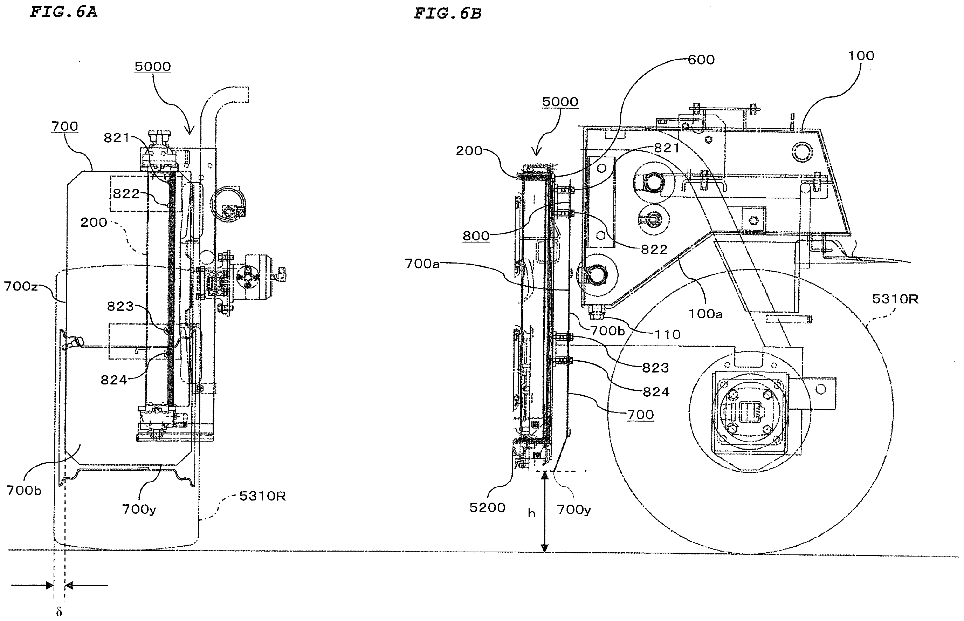

Now, in the present embodiment for which descriptions have been given in detail in the foregoing the mudguard 400 has a posture slanting in the front-and-rear direction but, as shown in FIGs. 6A and 6B, a mudguard 700 may have a posture parallel to a radiator face 200b as the front face of the radiator 200.

Here, FIG. 6A is a partial front view of a neighborhood of the right front wheel 5310R of the riding grass-mower of another embodiment in the present invention, and FIG. 6B is a partial right side view of a neighborhood of the right front wheel 5310R of the riding grass-mower of another embodiment in the present invention.

Since the mudguard 700 has a posture parallel to the radiator face 200b, and the upper side and the rear side of the right front wheel 5310R are nearly completely covered by the tank 100 and the mudguard 700, there is almost no fear that the mud which has splashed behind accompanying the rotation of the right front wheel 5310R unfavorably adheres to the cover-portion of the radiator 200.

The relevant riding grass-mower of another embodiment is analogous to the riding grass-mower of the present embodiment described above, but is different from the riding grass-mower of the present embodiment in the following points.

The mudguard 700 is positioned behind the drain 110.

Since the drain 110 is located on the frontward side compared with a mudguard face 700b which is the front face of the mudguard 700, there is almost no fear that smooth discharge from the drain 110 is unfavorably prevented.

A mudguard end part 700y as the lower-end part of the mudguard 700 is positioned below the radiator face 200a as the bottom face of the radiator 200.

Since the mudguard end part 700y gets close to the radiator net 201 from below, there is almost no fear that the mud which has splashed behind accompanying the rotation of the right front wheel 5310R unfavorably adheres to the radiator net 201 and the like.

The mudguard end part 700y as the lower-end part of the mudguard 700 is rearwardly bent.

Since the height h of the mudguard end part 700y from the farm-field face is larger than the height of the bottom face of the transmission case 5200 from the farm-field face which defines the minimum ground clearance, the minimum ground clearance does not become small accompanying the installation of the mudguard 700 and, also when the traveling is performed in a farm-field which has undulations, there is almost no fear that the mudguard 700 unfavorably interferes with the farm-field face.

And, since a mudguard end part 700z which is the outer-end part of the mudguard 700 is located on the inward side compared with the outer-end face of the right front wheel 5310R approximately at a distance of δ=22.5[cm], also when working is performed around a wall or a tree, there is almost no fear that the mudguard 700 unfavorably interferes with these.

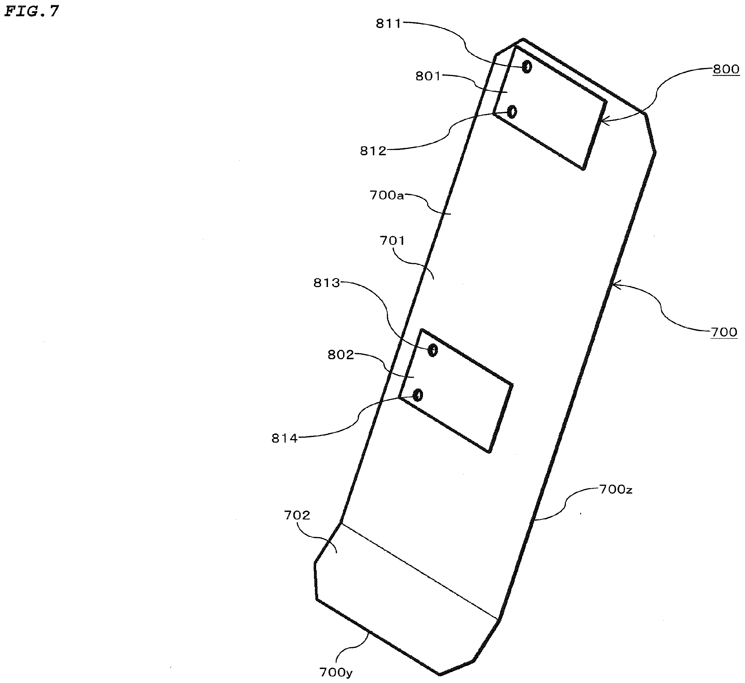

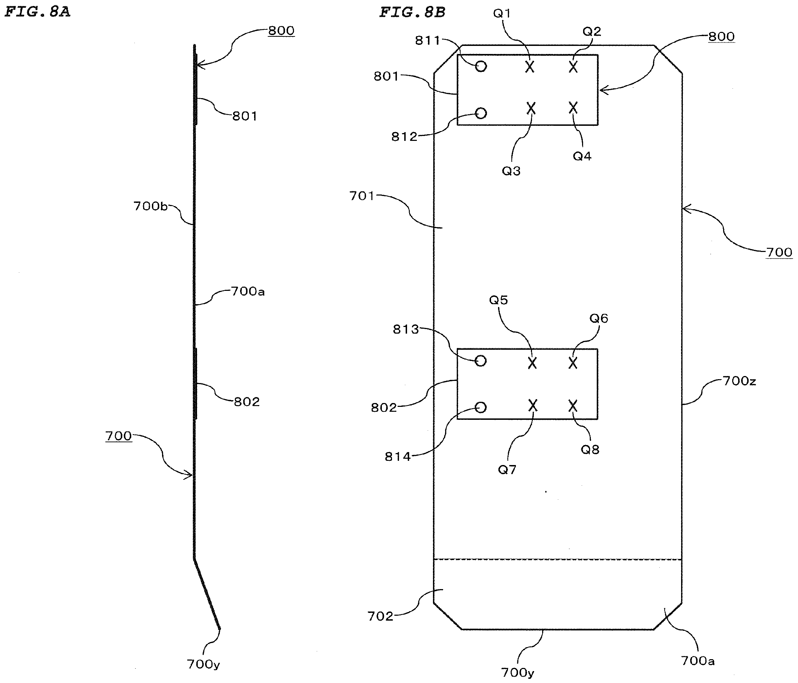

Mainly referring to FIG. 7 and FIGs. 8A and 8B, regarding the mudguard 700 and a mudguard-attaching member 800, more detailed descriptions are given as follows.

Here, FIG. 7 is a perspective view of the mudguard 700 and the mudguard-attaching member 800 of the riding grass-mower of another embodiment in the present invention, FIG. 8A is a left side view of the mudguard 700 and the mudguard-attaching member 800 of the riding grass-mower of another embodiment in the present invention, and FIG. 8B is a rear view of the mudguard 700 and the mudguard-attaching member 800 of the riding grass-mower of another embodiment in the present invention.

The mudguard 700 which is attached to a radiator-attaching frame 600 has, as described above, a posture parallel to the radiator face 200b, but the mudguard 700 and the mudguard-attaching member 800 are, in FIG. 7, not shown in such a manner that the mudguard 700 is contained within the vertical face.

The mudguard 700 is a plate nearly in a planar-plate shape such that the four corner parts are cut off, which is bent into two portions.

The mudguard-attaching member 800 is a plate in a planar-plate shape, for which the division into two portions is made.

More specifically, descriptions are given as follows.

The mudguard 700 possesses mudguard flat-portions 701 and 702 which are linked in this order from the upper side toward the lower side.

The mudguard flat-portion 701 is the main-body-portion to which the mudguard-attaching member 800 is joined, and the mudguard flat-portion 702 is the bent-portion to the rearward.

The mudguard-attaching member 800 possesses mudguard-attaching member flat-portions 801 and 802 for which the division in this order from the upper side toward the lower side is made.

The mudguard-attaching member flat-portion 801 is welded to a mudguard face 700a at welding positions Q1 to Q4, and the mudguard-attaching member flat-portion 802 is welded to the mudguard face 700a at welding positions Q5 to Q8.

Thus, as described above, the front side of the mudguard-attaching member 800 is joined to the mudguard face 700a.

In the mudguard flat-portion 701 and the mudguard-attaching member flat-portion 801 mudguard-attaching bolt holes 811 and 812 are bored, and in the mudguard flat-portion 701 and the mudguard-attaching member flat-portion 802 mudguard-attaching bolt holes 813 and 814 are bored.

Mudguard-attaching bolts 821 to 824 which fasten up the mudguard 700 and the mudguard-attaching member 800 to the radiator-attaching frame 600 are respectively inserted into the mudguard-attaching bolt holes 811 to 814.

Thus, as described above, the rear side of the mudguard-attaching member 800 is connected to the radiator-attaching frame 600.

Since the mudguard-attaching bolt holes 811 to 814 are bored lining up in the up-and-down direction, and the mudguard-attaching bolts 821 to 824 are respectively inserted into the mudguard-attaching bolt holes 811 to 814 from the side of the mudguard face 700b which is the front face of the mudguard 700, attachment/detachment working of the plural mudguard-attaching bolts 821 to 824 is easy.

Additionally, the mudguard-attaching bolts 821 to 824 may be utilized not only for fastening up the mudguard-attaching member 800 to the radiator-attaching frame 600, but also for fastening up the radiator 200 to the radiator-attaching frame 600. Since in a configuration like this, where the mudguard-attaching bolts 821 to 824 are utilized in common for the attachment of the mudguard-attaching member 800 and the radiator 200, the mudguard 700 is detached along with the mudguard-attaching member 800 if the mudguard-attaching bolts 821 to 824 are detached, detachment working of the radiator 200 is easy.

A working vehicle in the present invention is such that the mudguard can be simply and compactly attached, and is useful for an object of utilization for a working vehicle such as a riding grass-mower or the like.

## Claims

1. A working vehicle comprising, a left front wheel (5310L) and a right front wheel (5310R), and a radiator (200) which is arranged behind one of the left front wheel (5310L) and the right front wheel (5310R),
a mudguard (400) which protects the radiator (200), and
a radiator-attaching frame (300) which attaches the radiator (200) to a vehicle-body (5000), wherein
in a case where the radiator (200) is arranged behind the left front wheel (5310L), the mudguard (400) is arranged between the left front wheel (5310L) and the radiator (200),
in a case where the radiator (200) is arranged behind the right front wheel (5310R), the mudguard (400) is arranged between the right front wheel (5310R) and the radiator (200), and
the mudguard (400) is attached to the radiator-attaching frame (300), wherein the working vehicle comprises a
tank (100) which accommodates oil-pressure oil or fuel, **characterized in that** in a case where the radiator (200) is arranged behind the left front wheel (5310L), all or part of the tank (100) is arranged above the left front wheel (5310L), and
in a case where the radiator (200) is arranged behind the right front wheel (5310R), all or part of the tank (100) is arranged above the right front wheel (5310R).

2. The working vehicle according to claim 1, comprising a mudguard-attaching member (500) which attaches the mudguard (400) to the radiator-attaching frame (300), wherein
the radiator-attaching frame (300) supports a front side of the radiator (200),
a front side of the mudguard-attaching member (500) is joined to a rear face of the mudguard (400), and
a rear side of the mudguard-attaching member (500) is connected to the radiator-attaching frame (300).

3. The working vehicle according to claim 1 or 2, wherein
the mudguard (400) has a posture slanting in a front-and-rear direction, where a position of a front-end part thereof is higher than a position of a rear-end part thereof,
the front-end part of the mudguard (400) is positioned ahead of a rear-end part of a bottom face of the tank (100), and
the rear-end part of the mudguard (400) is positioned below a bottom face of the radiator (200).

4. The working vehicle according to claim 3, wherein
at a rear part of the bottom face of the tank (100), a drain (110) is provided, and
the front-end part of the mudguard (400) is positioned ahead of the drain (110).

5. The working vehicle according to claim 1 or 2, wherein
the mudguard (700) has a posture parallel to a front face of the radiator (200),
at a rear part of the bottom face of the tank (100), a drain (110) is provided, and
the mudguard (700) is positioned behind the drain (110).

6. The working vehicle according to claim 5, wherein
a lower-end part of the mudguard (700) is positioned below a bottom face of the radiator (200), and is rearwardly bent.

## Patentansprüche

1. Arbeitsfahrzeug, umfassend ein linkes Vorderrad (5310L) und ein rechtes Vorderrad (5310R) und einen Kühler (200), der hinter einem des linken Vorderrads (5310L) und des rechten Vorderrads (5310R) angeordnet ist,
einen Kotflügel (400), der den Kühler (200) schützt, und
einen Kotflügelbefestigungsrahmen (300), der den Kühler (200) an einer Fahrzeugkarosserie (5000) befestigt, wobei
wenn der Kühler (200) hinter dem linken Vorderrad (5310L) angeordnet ist, der Kotflügel (400) zwischen dem linken Vorderrad (5310L) und dem Kühler (200) angeordnet ist,
wenn der Kühler (200) hinter dem rechten Vorderrad (5310R) angeordnet ist, der Kotflügel (400) zwischen dem rechten Vorderrad (5310R) und dem Kühler (200) angeordnet ist, und
der Kotflügel (400) am Kühlerbefestigungsrahmen (300) befestigt ist,
wobei das Arbeitsfahrzeug einen Tank (100) umfasst, der Öldrucköl oder Treibstoff aufnimmt, **dadurch gekennzeichnet, dass**
wenn der Kühler (200) hinter dem linken Vorderrad (5310L) angeordnet ist, der Tank (100) teilweise oder als Ganzes über dem linken Vorderrad (5310L) angeordnet ist, und
wenn der Kühler (200) hinter dem rechten Vorderrad (5310R) angeordnet ist, der Tank (100) teilweise oder als Ganzes über dem rechten Vorderrad (5310R) angeordnet ist.

2. Arbeitsfahrzeug nach Anspruch 1, umfassend ein Kotflügelbefestigungselement (500), das den Kotflügel (400) am Kühlerbefestigungsrahmen (300) befestigt, wobei
der Kühlerbefestigungsrahmen (300) eine Vorderseite des Kühlers (200) trägt,
eine Vorderseite des Kotflügelbefestigungselements (500) mit einer Rückseite des Kotflügels (400) verbunden ist, und
eine Rückseite des Kotflügelbefestigungselements (500) mit dem Kühlerbefestigungsrahmen (300) verbunden ist.

3. Arbeitsfahrzeug nach Anspruch 1 oder 2, wobei
der Kotflügel (400) eine Stellung aufweist, die in einer Vorne-und-Hinten-Richtung abgeschrägt ist, wobei eine Position eines vorderen Endteils davon höher als eine Position eines hinteren Endteils davon ist,
der vordere Endteil des Kotflügels (400) vor einem hinteren Endteil einer Bodenseite des Tanks (100) positioniert ist, und
der hintere Endteil des Kotflügels (400) unter einer Bodenseite des Kühlers (200) positioniert ist.

4. Arbeitsfahrzeug nach Anspruch 3, wobei
ein Ablauf (110) in einem hinteren Teil der Bodenseite des Tanks (100) bereitgestellt ist, und
der vordere Endteil des Kotflügels (400) vor dem Ablauf (110) positioniert ist.

5. Arbeitsfahrzeug nach Anspruch 1 oder 2, wobei
der Kotflügel (700) eine Stellung parallel zu einer Vorderseite des Kühlers (200) aufweist,
ein Ablauf (110) in einem hinteren Teil der Bodenseite des Tanks (100) bereitgestellt ist, und
der Kotflügel (700) hinter dem Ablauf (110) positioniert ist.

6. Arbeitsfahrzeug nach Anspruch 5, wobei
der untere Endteil des Kotflügels (700) unter einer Bodenseite des Kühlers (200) positioniert und rückwärts gebogen ist.

## Revendications

1. Véhicule de travail comprenant, une roue avant gauche (5310L) et une roue avant droite (5310R), et un radiateur (200) qui est agencé derrière l'une de la roue avant gauche (5310L) et la roue avant droite (5310R),
un garde-boue (400) qui protège le radiateur (200), et
un cadre de fixation de radiateur (300) qui fixe le radiateur (200) à une carrosserie de véhicule (5000), dans lequel
dans un cas dans lequel le radiateur (200) est agencé derrière la roue avant gauche (5310L), le garde-boue (400) est agencé entre la roue avant gauche (5310L) et le radiateur (200),
dans un cas dans lequel le radiateur (200) est agencé derrière la roue avant droite (531 OR), le garde-boue (400) est agencé entre la roue avant droite (531OR) et le radiateur (200), et
le garde-boue (400) est fixé au cadre de fixation de radiateur (300),
le véhicule de travail comprenant un réservoir (100) qui reçoit de l'huile ou du carburant sous pression d'huile, **caractérisé en ce que**
dans un cas dans lequel le radiateur (200) est agencé derrière la roue avant gauche (5310L), la totalité ou une partie du réservoir (100) est agencée au-dessus de la roue avant gauche (5310L), et
dans un cas dans lequel le radiateur (200) est agencé derrière la roue avant droite (5310R), la totalité ou une partie du réservoir (100) est agencée au-dessus de la roue avant droite (5310R).

2. Véhicule de travail selon la revendication 1. comprenant un élément de fixation de garde-boue (500) qui fixe le garde-boue (400) au cadre de fixation de radiateur (300), dans lequel
le cadre de fixation de radiateur (300) soutient un côté avant du radiateur (200),
un côté avant de l'élément de fixation de garde-boue (500) est assemblé à une face arrière du garde-boue (400), et
un côté arrière de l'élément de fixation de garde-boue (500) est raccordé au cadre de fixation de radiateur (300).

3. Véhicule de travail selon la revendication 1 ou 2, dans lequel
le garde-boue (400) présente une inclinaison de posture dans une direction avant et arrière, où une position d'une partie d'extrémité avant de celui-ci est plus élevée qu'une position d'une partie d'extrémité arrière de celui-ci,
la partie d'extrémité avant du garde-boue (400) est positionnée devant une partie d'extrémité arrière d'une face inférieure du réservoir (100), et
la partie d'extrémité arrière du garde-boue (400) est positionnée au-dessous d'une face inférieure du radiateur (200).

4. Véhicule de travail selon la revendication 3, dans lequel
au niveau d'une partie arrière de la face inférieure du réservoir (100), un drain (110) est disposé, et
la partie d'extrémité avant du garde-boue (400) est positionnée devant le drain (110).

5. Véhicule de travail selon la revendication 1 ou 2, dans lequel
le garde-boue (700) a une posture parallèle à une face avant du radiateur (200),
au niveau d'une partie arrière de la face inférieure du réservoir (100), un drain (110) est disposé, et
le garde-boue (700) est positionné derrière le drain (110).

6. Véhicule de travail selon la revendication 5, dans lequel une partie d'extrémité inférieure du garde-boue (700) est positionnée au-dessous d'une face inférieure du radiateur (200), et est fléchie vers l'arrière.
